# EUROPÄISCHE PATENTSCHRIFT

(11) **EP 0 922 969 B1**
(45) Veröffentlichungstag und Bekanntmachung des Hinweises auf die Patenterteilung: **26.03.2003**
(21) Anmeldenummer: 98118300.7
(22) Anmeldetag: 28.09.1998
(51) Int. Cl.: G01V 3/10

(54) **Rahmen für ein Suchgerät**
Coil form for a search apparatus
Carcasse de bobine pour un dispositif détecteur

(30) Priorität: 10.12.1997 DE 29721864 U
(43) Veröffentlichungstag der Anmeldung: 16.06.1999
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- EP-A- 0 767 390
- DE-A- 3 526 492
- DE-U- 8 800 815

## Beschreibung

Die Erfindung betrifft einen Rahmen für ein Suchgerät zum Detektieren und Orten von insbesondere metallischen Gegenständen, der zur Aufnahme von Leiterschleifen ausgebildet und klapp- oder faltbar ausgelegt ist, wobei der Rahmen Teilstücke aufweist, die durch Gelenke verbunden sind.

Derartige Rahmen werden insbesondere für Suchgeräte mit Großschleifen zum Absuchen großer Flächen eingesetzt. Ein Rahmen der eingangs genannten Art ist aus der DE 295 14 494.7 U1 bekannt. Dieser Rahmen ist in der Außenform sechseckig und weist zusätzlich Verstrebungen auf, die in einem zentralen Punkt zusammenlaufen. In den Eckbereichen sind Gelenke vorgesehen, so daß der Rahmen nach Lösen der inneren Verstrebungen zusammengefaltet werden kann.

In Suchgeräten zum Absuchen großer Flächen mit einem möglichst großen Rahmen wird üblicherweise ein Pulsinduktionsverfahren angewandt, bei dem ein Strom durch eine Sendeschleife geschickt wird, der sich nach einer Sprungfunktion, also pulsartig, ändert. Der durch die Sendescheife fliessende Strom erzeugt im Suchobjekt einen Wirbelstrom, der wiederum eine sekundäre Magnetisierung verursacht. Mit einer im Suchgerät vorgesehenen Empfangsschleife erhält man dann einen Sekundärimpuls, der Informationen über den Ort und die Art des gesuchten Objekts enthält und ausgewertet wird.

Der Erfindung liegt nun die **Aufgabe** zugrunde, einen Rahmen der eingangs genannten Art zu schaffen, der besonders leicht handhabbar und einfach und günstig herstellbar ist. Weiterhin liegt der Erfindung die Aufgabe zugrunde, ein Fahrgestell zum Transport eines solchen Rahmens zu schaffen.

Die Lösung dieser Aufgabe erfolgt mit den kennzeichnenden Merkmalen des Patentanspruchs 1. Vorteilhafte Weiterbildungen der Erfindung sind in den Unteransprüchen beschrieben.

Nach dem Grundgedanken der Erfindung sind in dem Rahmen Gelenke vorgesehen, die ein Zusammenklappen des Rahmens ermöglichen, wobei die Teile des Rahmens zusammenbleiben und keine Einzelteile verloren gehen können.
Dazu sind in dem Rahmen mindestens zwei Gelenke vorhanden, die symmetrisch in dem Rahmen und zueinander angeordnet sind und in einem sich im wesentlichen linear erstreckenden Bereich des Rahmens angeordnet sind. Das bedeutet, daß die beiden Gelenke beispielsweise in sich gegenüberliegenden Seitenbereichen eines rechteckigen Rahmens angeordnet sein können. Diese zwei Gelenke sind weiterhin senkrecht zu einer Rahmenebene klappbar, so daß beispielsweise bei einem rechteckigen Rahmen ein Teil dieses Rahmens durch das Gelenk nach unten weggeklappt werden kann. Die Teilstücke des Rahmens, die durch die Gelenke miteinander verbunden sind, sind auch im geklappten Zustand des Rahmens mit den Gelenken in Verbindung, so daß der Rahmen insgesamt erhalten bleibt und sich lediglich die Form und Anordnung der verschiedenen Teilstücke zueinander ändert.

Ein derartiger Rahmen ist leicht zu handhaben und zu klappen und weist keine verlierbaren Teile auf, das bedeutet, daß sämtliche Teilbereiche des Rahmens sowohl im ausgeklappten Einsatzzustand als auch im zusammengeklappten Transportzustand in fester mechanischer Verbindung zueinander stehen.

In einer bevorzugten Ausführungsform der Erfindung sind die Gelenke um nahezu 180° klappbar, so daß zwei an ein Gelenk angrenzende Teile, die vorher eine Gerade gebildet haben, im geklappten Zustand unmittelbar benachbart zueinander angeordnet sind, so daß eine maximale Platzersparnis erreicht wird. Die Gelenke sind im übrigen günstigerweise insoweit starr ausgebildet, als eine Klappbewegung nur in einer Ebene erfolgen kann und ein seitliches Verschwenken und Verziehen der Klappbewegung nicht möglich ist.

In einer bevorzugten Ausführungsform weisen die Gelenke zwei parallel und benachbart zueinander angeordnete, gegeneinander drehbare Scheiben auf, die unabhängig voneinander um eine gemeinsame Achse drehbar sind. Die Scheiben sind dabei bevorzugt aus Kunststoff ausgebildet und die Achse wird von einer Kunststoffschraube oder Achse gebildet, so daß auch dieser Teil des Rahmens gegenüber den elektromagnetischen Impulsen neutral ist. Jedes Gelenk weist dabei zwei Schenkel auf und jeder Schenkel weist wiederum ein Verbindungsstück und eine fest damit verbundene Scheibe auf, wobei die Scheibe nicht zentral an dem Verbindungsstück sondern etwas versetzt befestigt ist und zwei Verbindungsstücke mit den daran jeweils leicht asymmetrisch befestigten Scheiben so verbunden werden können, daß die beiden nebeneinander liegenden Scheiben insgesamt symmetrisch zwischen den Verbindungsstücken angeordnet sind. Die Scheiben sind günstigerweise als Hohlscheiben ausgebildet.

Die Teilstücke des Rahmens, aus denen der Rahmen zusammengesetzt ist, sind als Kohlefaserrohre ausgebildet, wobei die Kohlefaserrohre im Inneren hohl und zur Aufnahme einer Leiterschleife ausgebildet sind. Dadurch können die Leiterschleifen und Kabel, also insbesondere eine Sendeschleife und eine Empfangsschleife im Inneren der Rohre und verdeckt verlegt werden. Die Kohlefaserrohre sind für die elektromagnetischen Impulse neutral und beeinflußen daher die Messung nicht.

In einer bevorzugten Ausführungsform ist der Rahmen im wesentlichen rechteckig ausgebildet und weist sechs Teilstücke, zwei Gelenke und außerdem vier Eckverbindungsstücke auf. Die Eckverbindungsstücke sind dabei günstigerweise aus einem topfartigen Drehteil und einem Deckel gebildet, wobei mit diesen eine 90°-Verbindung zwischen zwei Teilstücken des Rahmens erreicht wird.

In einer zweiten bevorzugten Ausführungsform ist der Rahmen im wesentlichen rechteckig ausgebildet und weist sechs Teilstücke und sechs Gelenke auf, wobei davon vier Gelenke in den Eckbereichen des Rahmens angeordnet sind. Dadurch ergibt sich die Möglichkeit, nicht nur die zwei Gelenke in den im wesentlichen linearen Bereichen des Rahmens zu klappen, sondern eine zweite Klappung mit den vier Gelenken in den Eckbereichen vorzunehmen, so daß der zusammengelegte Rahmen gegenüber dem ursprünglichen Rahmen wesentlich verkleinert werden kann. Der so zusammengelegte Rahmen erstreckt sich im wesentlichen nur noch über die Länge eines Teilstücks des Rahmens.

In einer dritten Ausführungsform wird ein nahezu beliebig veränderbarer Rahmen geschaffen, bei dem eine beliebig große gerade Anzahl von Teilstücken und modizifierten Gelenken oder Verbindungsstücken verwendet wird. Dabei weisen die modifizierten Verbindungsstücke Zapfen zur Aufnahme von den Rahmen unterteilenden Rohren auf. Durch die Vielzahl der Gelenke in den linearen Abschnitten kann der Rahmen auf die Größe eines Unterabschnitts zusammengelegt werden, wobei die Anzahl der verschiedenen Abschnitte beliebig ist. In den Eckbereichen sind dabei bevorzugt Eckverbindungsstücke vorgesehen, so daß insgesamt also 2n-Gelenke, 3n + 4 Rahmenteilstücke und den Rahmen unterteilende Rohre und in den abschließenden Eckbereichen vier Eckverbindungsstücke vorhanden sind. Bei einem Rahmen mit sechs Verbindungsstücken sind also dreizehn Rahmenteilstücke und bei einem Rahmen mit vier Verbindungsstücken sind zehn Rahmenteilstücke erforderlich.

Ein weiterer Aspekt der Erfindung besteht darin, ein Suchgerät zum Detektieren und Orten von insbesondere metallischen Gegenständen mit mindestens einer Leiterschleife, insbesondere einer Sendeschleife und mindestens einer Empfangsschleife, und einem Rahmen zur Aufnahme der Schleifen bereitzustellen, welches sich dadurch auszeichnet, daß der Rahmen entsprechend der vorausgegangenen Beschreibung des erfindungsgemäßen Rahmens ausgebildet ist. Insoweit wird auf die vorausgegangene Erörterung Bezug genommen.

Weiterhin soll mit der Erfindung ein Fahrgestell zum Transport eines solchen Rahmens bereitgestellt werden. Der Rahmen ist sehr groß ausgebildet, um große Flächen absuchen zu können. Das Fahrgestell zeichnet sich dadurch aus, daß es steckbare Kunststoffrohre, insbesondere PVC-Rohre, aufweist, daß aus Kunststoff bestehende Räder vorgesehen sind und daß die Breite des Fahrgestells etwas größer ist als die Breite des Rahmens.

Mit einem solchen Fahrgestell kann der oben beschriebene Rahmen besonders einfach eingesetzt werden und ist besonders einfach handhabbar ohne daß dabei die Messung beeinflußt würde, da das Fahrgestell insgesamt aus Materialien aufgebaut ist, die die Messung nicht beeinflussen. Weiterhin ist das Fahrgestell ebenso wie der Rahmen zerlegbar, da das Fahrgestell aus steckbaren Kunststoffrohren besteht. Das Fahrgestell kann also in seinen Abmessungen ebenso wie der Rahmen verkleinert werden und daher besser von einem Einsatzort zum anderen transportiert werden.

Bevorzugt weisen die steckbaren Rohre des Fahrgestells in Verbindungsbereichen von jeweils zwei Rohren, die zusammengesteckt werden sollen, korrespondierende Bohrungen auf, in die ein Dorn steckbar ist, so daß eine zuverlässige und sichere Verbindung zwischen den steckbaren Rohren hergestellt wird.

Nachfolgend wird die Erfindung anhand von in der Zeichnung dargestellten Ausführungsbeispielen weiter erläutert. Im einzelnen zeigen die schematischen Darstellungen in:
- Fig. 1: eine erste Ausführungsform eines erfindungsgemäßen Rahmens;
- Fig. 2: eine Seitenansicht eines Rahmens gemäß Fig. 1 in der Klappbewegung;
- Fig. 3: eine vergrößerte und geschnittene Teilansicht eines in Fig. 2 dargestellten Gelenks;
- Fig. 4 und 5:: jeweils einen Schenkel eines Gelenks;
- Fig. 6: ein im 90° Winkel abgewinkeltes Gelenk;
- Fig. 7: eine Seitenansicht eines Teils eines Eckverbindungsstücks;
- Fig. 8: eine Draufsicht auf ein Teil gemäß Fig. 7;
- Fig. 9: eine Seitenansicht eines weiteren Teils eines Eckverbindungsstücks;
- Fig. 10: eine Draufsicht auf ein Teil gemäß Fig. 9;
- Fig. 11: eine Draufsicht auf eine zweite Ausführungsform eines Rahmens;
- Fig. 12: eine Draufsicht auf den Rahmen gemäß Fig. 11 nach einem ersten Klappvorgang;
- Fig. 13: eine Draufsicht auf den Rahmen gemäß Fig. 11 während eines zweiten Klappvorgangs;
- Fig. 14: eine dritte Ausführungsform eines Rahmens in einer Draufsicht;
- Fig. 15: eine Seitenansicht eines Rahmens gemäß Fig. 14 während des Klappvorgangs;
- Fig. 16: ein Fahrgestell mit einem darauf aufliegenden Rahmen gemäß Fig. 14; und
- Fig. 17: ein zerlegtes Fahrgestell gemäß Fig. 16.

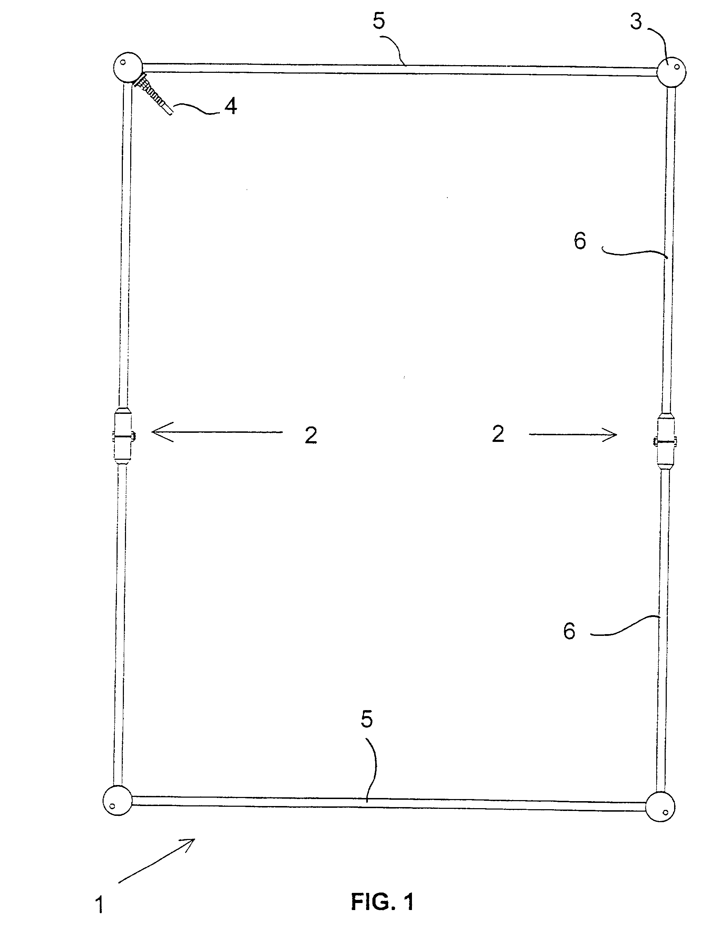

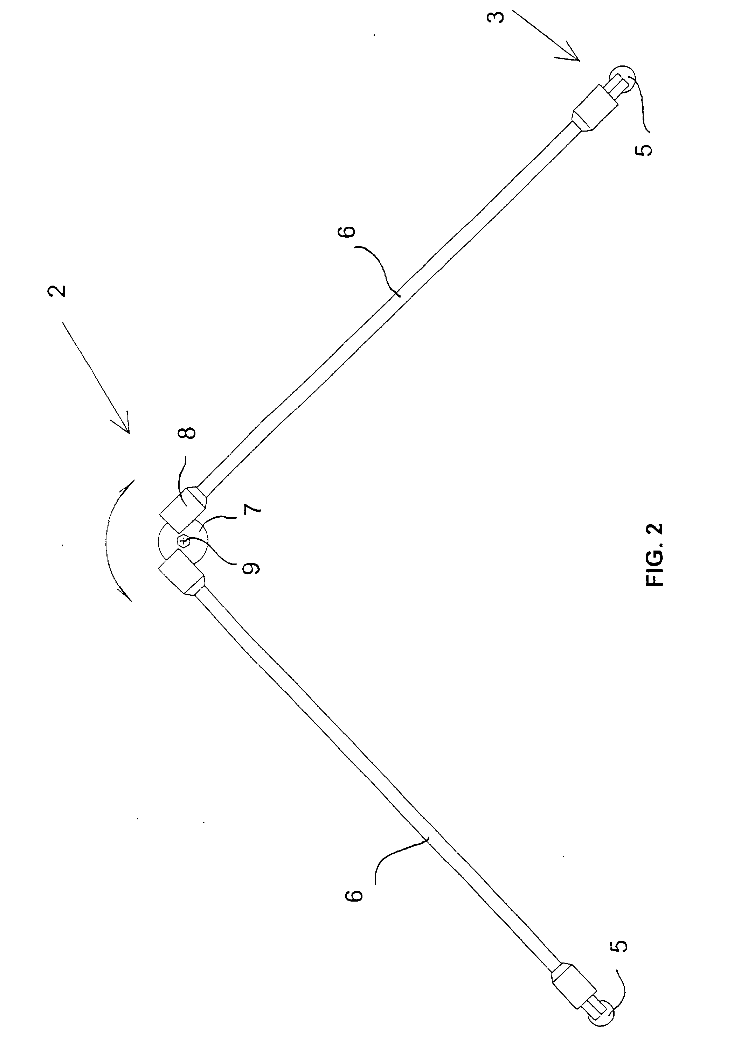

In Fig. 1 ist ein erfindungsgemäßer Rahmen in einer besonders einfachen Ausführungsform dargestellt, der insgesamt mit 1 bezeichnet ist. Der Rahmen weist zwei Gelenke 2 auf, die jeweils in der geometrischen Mitte der Längsseiten des rechteckigen Rahmens 1 angeordnet sind. In den Ecken hat der Rahmen jeweils ein Eckverbindungsstück 3, wobei in einem der Eckverbindungsstücke 3 ein Kabelanschluß 4 vorgesehen ist, über den die elektrische Verbindung der Leiterschleifen sichergestellt wird. Insgesamt hat der Rahmen 1 sechs Teilstücke 5 und 6, wobei die vier Teilstücke 6 die Längsseiten des Rechtecks bilden und jeweils gleich lang sind. Die beiden Teilstücke 5 des Rahmens 1 bilden die Querseiten des Rechtecks. In der hier dargestellten Ausführungsform weisen die Teilstücke 6 eine Länge von ungefähr zwei Dritteln der Länge der Teilstücke 5 auf. In einer anderen bevorzugten Ausführungsform sind die Teilstücke 5 und 6 jeweils gleich lang, so daß der Rahmen 1 im zusammengeklappten Zustand quadratische Abmessungen aufweist. Der Klapp- oder Faltvorgang dieses Rahmens 1 wird in der Fig. 2 deutlich, die eine Seitenansicht während des Klappvorgangs darstellt.

Das Gelenk 2 ist dabei aus der gestreckten Form, in der es ein Bestandteil des im wesentlichen linearen Teilbereichs des Rahmens 1 war, abgeklappt worden, so daß der ursprüngliche 180° Winkel nunmehr in einen Winkel von ungefähr 90° zwischen den beiden Teilstücken 6 des Rahmens 1 übergegangen ist. In der Endstellung beträgt der Winkel zwischen den beiden Teilstücken 6 des Rahmens 1 nahezu 0 Grad, d.h., daß die beiden Teilstücke 6 benachbart und nahezu parallel nebeneinander liegen. Das Gelenk 2 weist eine Achse 9 auf, die den Mittelpunkt eines zentralen Gelenkbereichs 7 bildet. An dem zentralen Gelenkbereich 7 setzen jeweils Verbindungsstücke 8 an, die den zentralen Gelenkbereich 7 mit den Teilstücken 6 des Rahmens 1 verbinden. Weiterhin sind in der Seitenansicht zwei Eckverbindungsstücke 3 dargestellt, wobei die Teilstücke 5 des Rahmens, die die Querseite des Rechtecks bilden, in der Zeichenebene nach hinten ausgerichtet sind. Durch das Zusammenklappen des Gelenks 2 werden die Abmessungen des Rahmens 1 halbiert, wobei der Rahmen im geklappten Zustand U-Form annimmt.

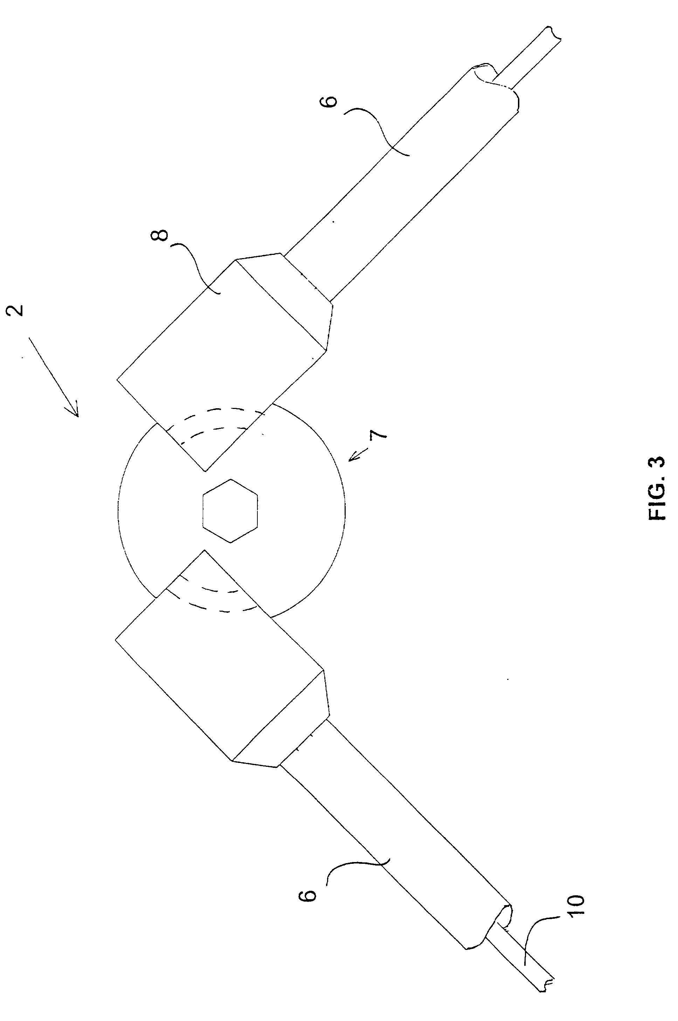

In Fig. 3 ist eine teilgeschnittene Detailansicht aus Fig. 2 dargestellt. Das Gelenk 2 wird von dem zentralen Gelenkbereich 7 und den Verbindungsstücken 8 gebildet. Der zentrale Gelenkbereich besteht aus zwei Hohlscheiben und einer zentralen Schraube aus Kunststoff, wobei jeweils eine der Hohlscheiben mit jeweils einem Verbindungsstück 8 verschraubt und verklebt ist. Die Teilstücke 6 des Rahmens sind aus hochstabilen Kohlefaserrohren aufgebaut, in deren Inneren eine Leiterschleife 10 verläuft. Die Leiterschleife 10 kann als Sende- und Empfangsschleife ausgebildet sein oder getrennte Sendeschleifen und Empfangsschleifen aufweisen. Das Schleifenkabel 10 verläuft völlig verdeckt durch den gesamten Rahmen 1 und auch durch die Gelenke 2, wodurch das Schleifenkabel 10 gegen mechanische Einflüsse und Störungen geschützt ist. Die beiden Verbindungsstücke 8 liegen im gestreckten, also linearen Zustand, mit ihren Endbereichen flächig aneinander an und verhindern so, daß eine weitere Klappbewegung nach oben erfolgt. Die Verbindungsstücke 8 bilden also eine Art Anschlag, so daß die Klappbewegung nur in eine Richtung, nämlich aus der Rahmenebene nach unten erfolgen kann.

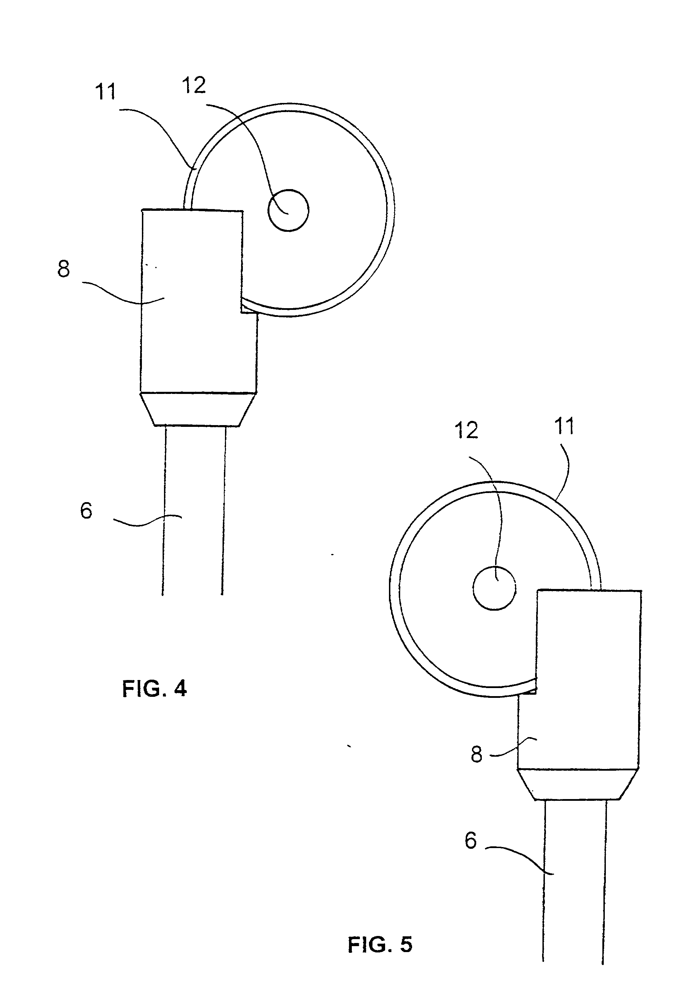

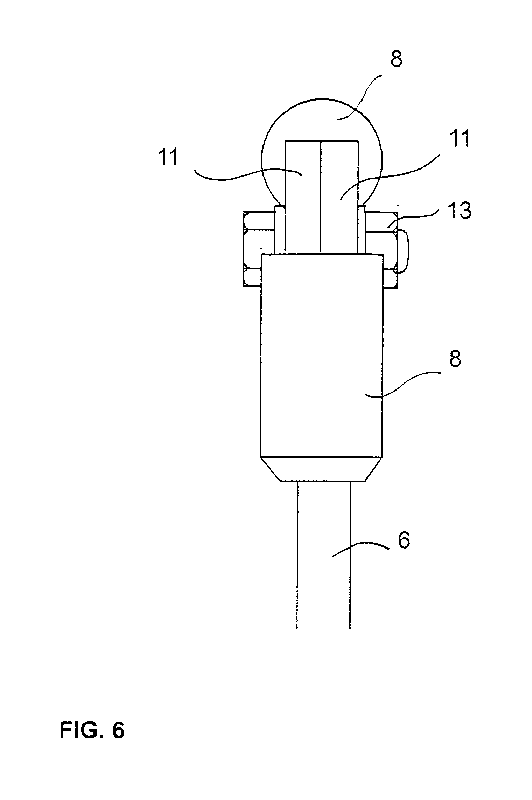

In den Fig. 4 und 5 sind ein linker und ein rechter Schenkel eines Gelenks 2 dargestellt. Diese Schenkel weisen jeweils ein Teilstück des Rahmens 6, ein Verbindungsstück und eine daran angeklebte und/oder verschraubte Hohlscheibe 11 auf. Die Verbindungsstücke 8 weisen eine zentrale Ausnehmung auf, die doppelt so breit ist wie die Breite einer Hohlscheibe. Die Hohlscheibe 11 ist an einem Randbereich dieser Ausnehmung angeordnet. Die beiden in den Fig. 4 und 5 dargestellten Schenkel werden nun zu einem Gelenk 2 gemäß Fig. 6 zusammengefügt, so daß die beiden Hohlscheiben direkt benachbart zueinander sind und jede der beiden Hohlscheiben 11 mit einem der beiden Verbindungsstücke 8 fest verbunden ist. Die Hohlscheiben 11 haben in ihrem Inneren ein Loch 12 und werden mit einer Zentralschraube 13 aus Kunststoff beweglich zusammengehalten. In Fig. 6 sind die beiden Schenkel des Gelenks 2 in einem 90° Winkel zueinander ausgerichtet.

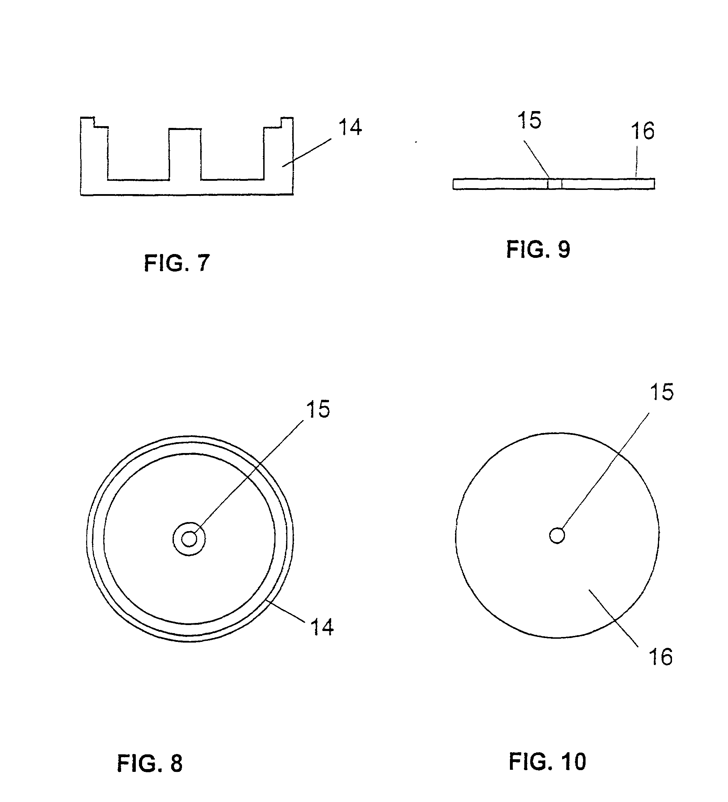

In den Fig. 7 bis 10 sind Einzelteile und Ansichten eines Eckverbindungsstücks 3 dargestellt, das auch in dem Rahmen gemäß Fig. 1 Verwendung findet. Das Eckverbindungsstück 3 weist ein topfartiges Drehteil 14 auf, das in einer Seitenansicht in Fig. 7 und in einer Draufsicht in Fig. 8 dargestellt ist. Die vergleichsweise dicke Wand des topfartigen Drehteils 14, das aus Kunststoff besteht, nimmt die Teilstücke 5, 6 des Rahmens 1 auf, die im Inneren des Eckverbindungsstücks eingeklebt werden. In dem Inneren des topfartigen Drehteils 14 verläuft auch das Schleifenkabel. Weiterhin ist auch ein Zentralloch 15 in dem Drehteil 14 vorgesehen, durch das eine Schnur gezogen werden kann, so daß an den Eckbereichen des Rahmens eine Tragvorrichtung befestigt werden kann. In dem Drehteil 14 kann ebenfalls der in Fig. 1 dargestellte und mit 4 gekennzeichnete Kabelanschluß angeordnet werden. Der Kabelanschluß 4 weist dabei eine Knickschutzhülle auf. Das Eckverbindungsstück 3 wird insgesamt von dem Drehteil 14 und einem Deckel 16 gebildet, der in einer Seitenansicht in Fig. 9 und in der Draufsicht in Fig. 10 dargestellt ist. Der Deckel hat ebenfalls das Zentralloch 15, in dem die Tragvorrichtung befestigt wird.

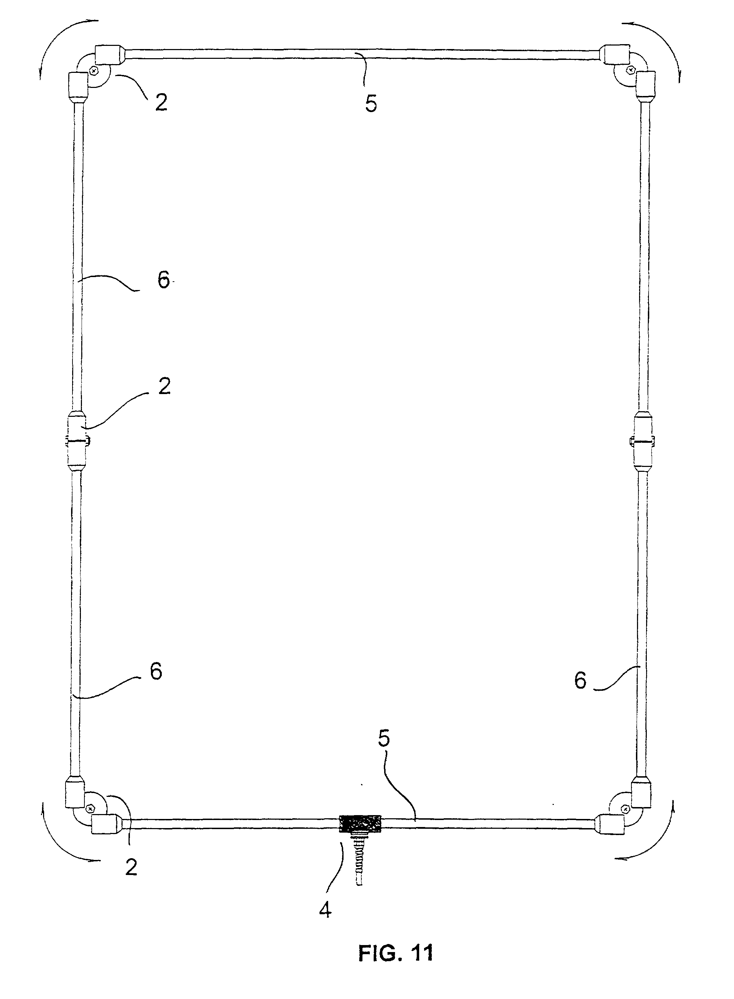

Eine zweite Ausführungsform eines erfindungsgemäßen Rahmens ist in den Fig. 11 bis 13 dargestellt. In der Draufsicht auf den Rahmen 1 in Fig. 11 wird deutlich, daß hier im Unterschied zu dem Rahmen gemäß Fig. 1 auch in den Eckbereichen Gelenke 2 eingesetzt sind. Der Rahmen weist also insgesamt sechs Gelenke und sechs Teilstücke 5 und 6 auf. Dabei sind die vier Gelenke 2, die in den Eckbereichen des Rahmens 1 angeordnet sind nicht im gestreckten Zustand, sondern in einem um 90° abgewinkelten Zustand, da die Gelenke 2 hier die Eckverbindungsstücke ersetzen müssen. Das Anschlußstück 4 ist hier in der Mitte eines Teilstücks 5 des Rahmens angeordnet, welches die Querseite des Rahmens 1 bildet.

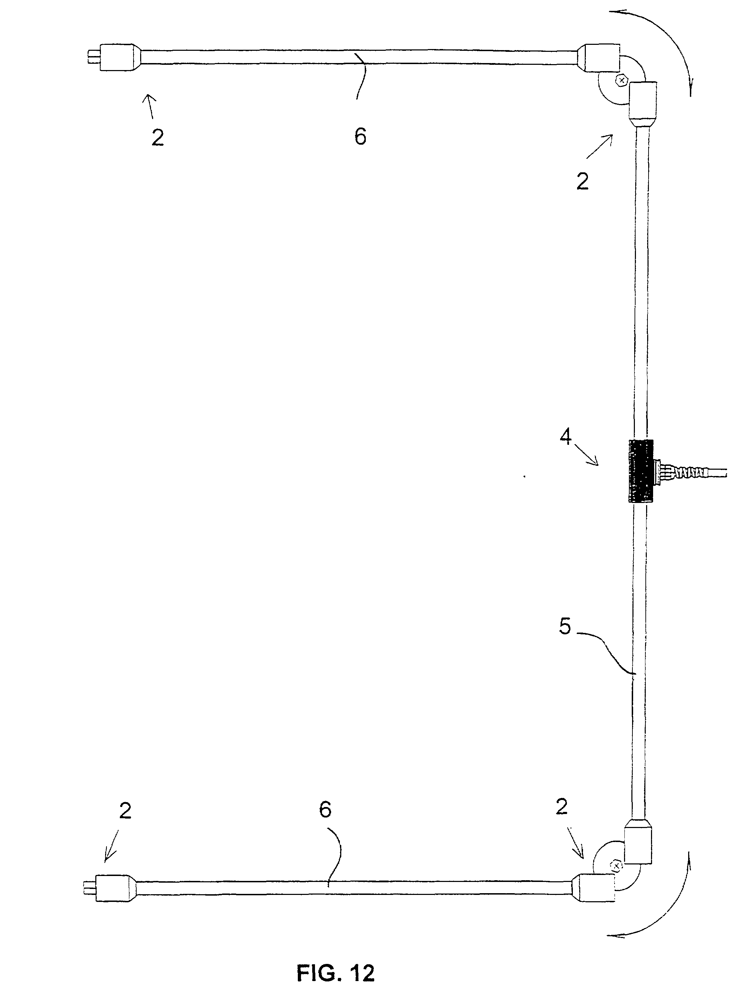

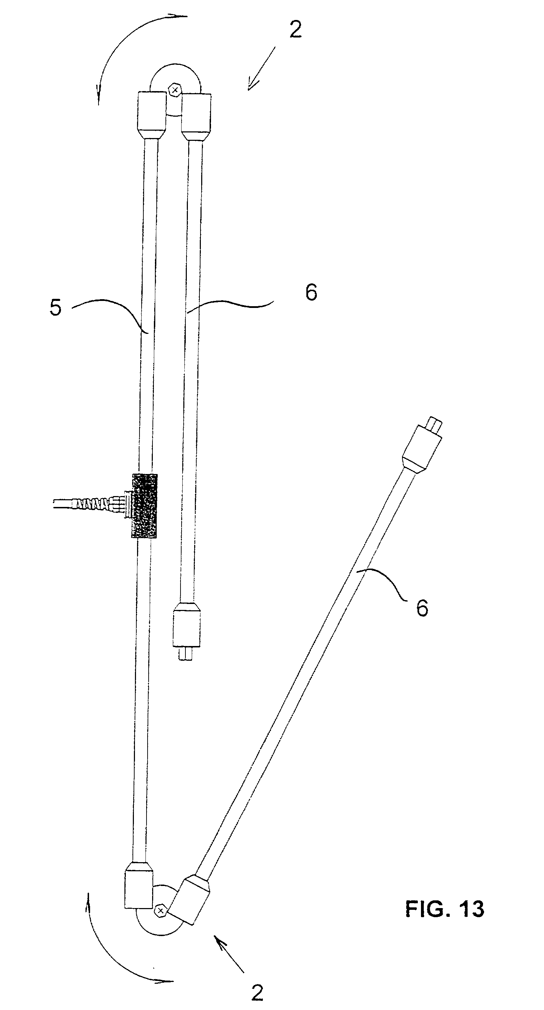

In Fig. 12 ist eine Draufsicht des Rahmens 1 dargestellt, nachdem die mittleren Gelenke 2 geklappt worden sind, so daß ein U-förmiger Rahmen entsteht, der mit dem vergleichbar ist, der nach der Klappung des Rahmens gemäß Fig. 1 entsteht. Im nächsten Schritt, der in Fig. 13 dargestellt ist, werden die in den Eckbereichen angeordneten Gelenke 2 geknickt, so daß der gesamte Rahmen auf einen linearen Bereich verkürzt werden kann.

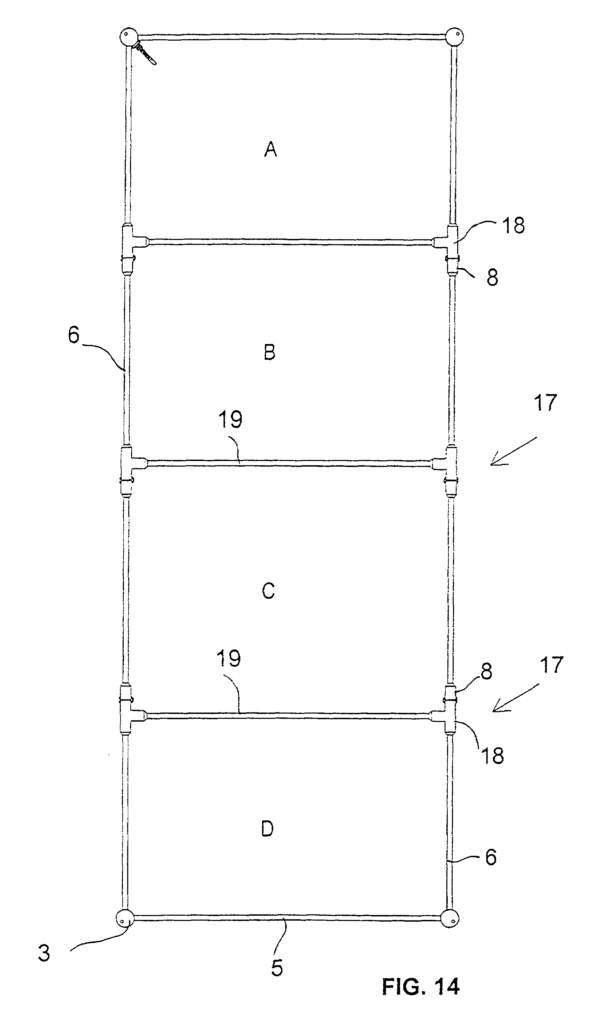

In Fig. 14 ist eine Draufsicht auf eine dritte Ausführungsform eines erfindungsgemäßen Rahmens dargestellt. Das besondere an diesem Rahmen ist, daß anstelle der bisher verwendeten Gelenke 2 in den linearen Bereichen des Rahmens modifizierte Gelenke 17 verwendet werden, die insofern modifiziert sind, als sie ein normales Verbindungsstück 8 und ein modifiziertes Verbindungsstück 18 aufweisen. Die Besonderheit des modifizierten Verbindungsstücks 18 liegt darin, daß es einen seitlichen Zapfen aufweist, in dem eine Querverstrebung 19 aufgenommen ist. Der gesamte Rahmen weist daher eine gerade Anzahl solcher Gelenke 17 an den Längsseiten des Großrahmens auf, die sich jeweils genau gegenüberliegen, so daß zwischen diesen das Verbindungsstück 19 eingesetzt werden kann. Zwischen zwei Gelenken 17 sind jeweils die Teilstücke 6 angeordnet, so daß die Gelenke 17 in äquidistantem Abstand voneinander angeordnet sind und daher bei der Klappbewegung der Gelenke 17 der gesamte Rahmen auf die Größe eines der Einzelfelder A, B, C oder D zurückgeführt werden kann. Mit diesem System ist eine Großschleife beliebiger Länge herstellbar, die durch die Verwendung der Gelenke 17 und der Verbindungsstücke 19 auch stabil ist. Mit Hilfe dieser Verbindungsstücke 19 lassen sich also Schleifen mit der Größe von zwei Feldern, was im vorliegenden Beispiel den Felder A und B entsprechen würde, herstellen. Ebenso lassen sich Schleifen in der Größe von drei Feldern, also in der Größe der Felder A, B und C oder auch beliebig größere Schleifen herstellen. Die Länge der Querseite wird durch das Teilstück 5 bestimmt, wobei die Länge dieser Teilstücke 5 mit der Länge der Verbindungsstücke 19 korrespondiert. Die Teilstücke 5 des Rahmens werden durch Eckverbindungsstücke 3 mit den Teilstücken 6 des Rahmens verbunden. Die Länge der Teilstücke 5 und 6 und auch der Verbindungsstücke 19 sind in ihren Abmessungen auf die entsprechenden Transportfahrzeuge abgestimmt.

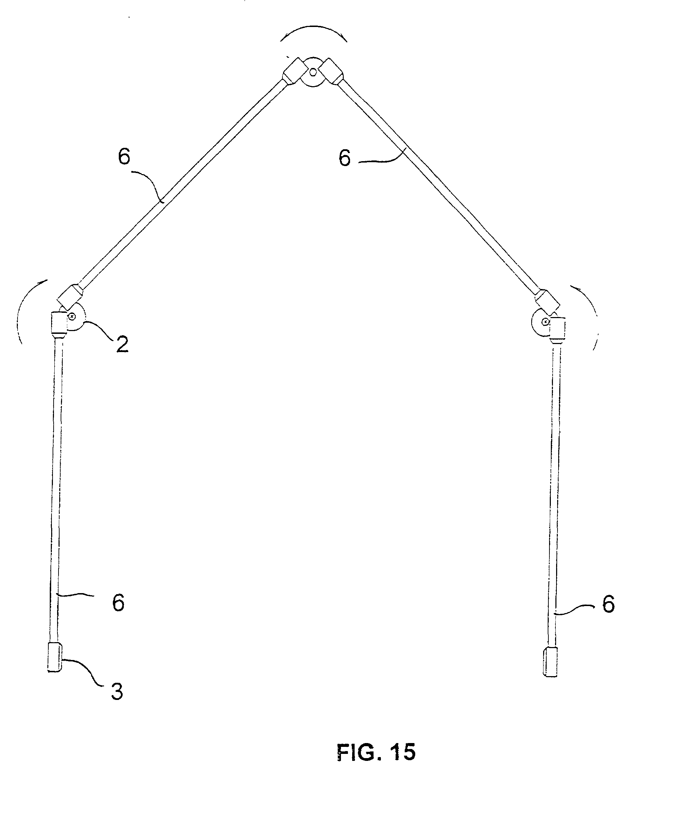

In der Fig. 15 ist eine Klappbewegung der in Fig. 14 dargestellten Großschleife wiedergegeben. Der Rahmen aus Fig. 14 ist hier in der Seitenansicht dargestellt, wobei sich im oberen Bereich der Zeichnung die Gelenke 17 befinden, die zwischen den Feldern B und C angeordnet sind. Bei der Klappbewegung werden also sämtliche Gelenke 17 geklappt, so daß der gesamte Rahmen auf die Größe eines Feldes reduziert werden kann.

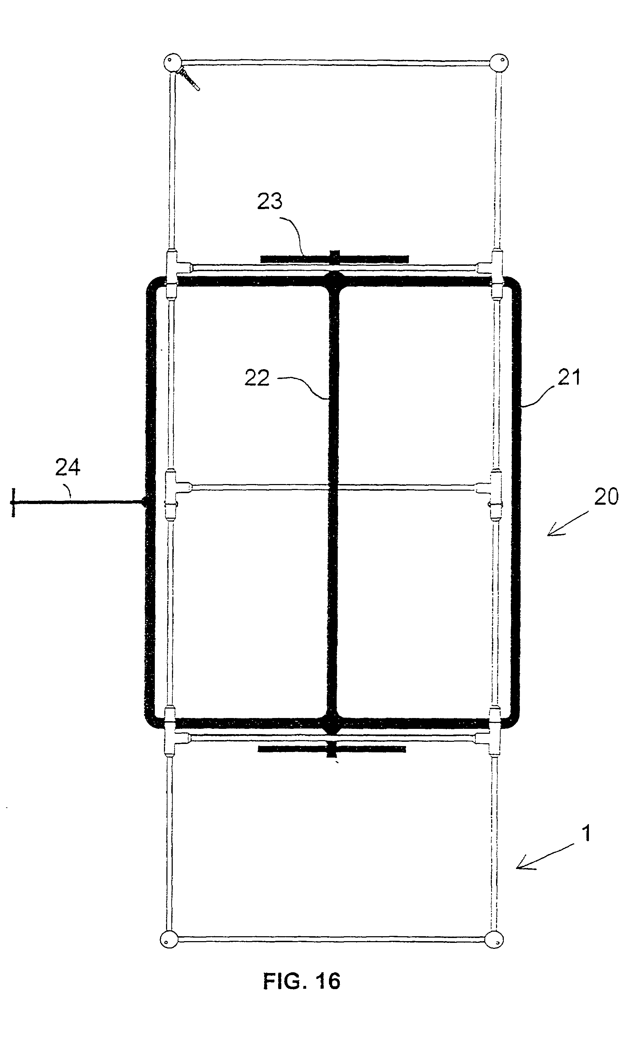

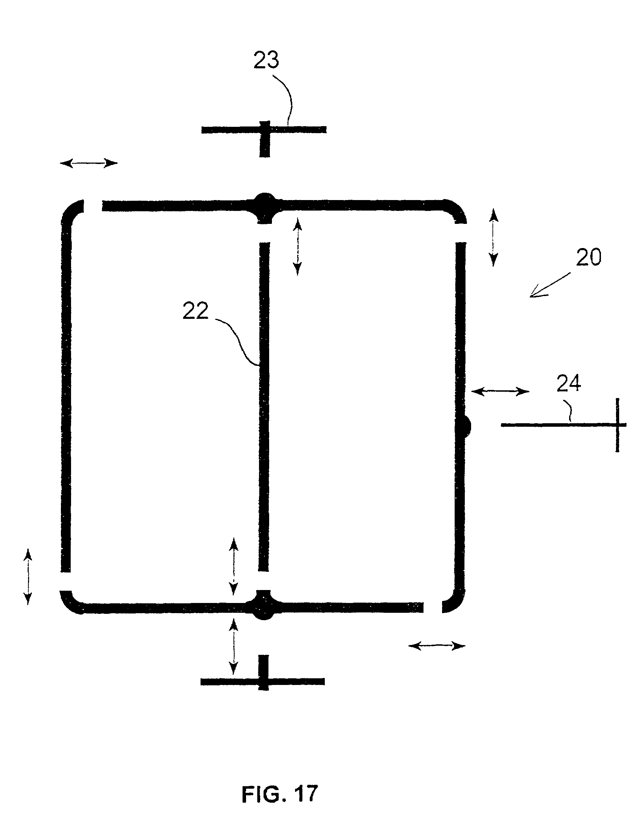

In den Figuren 16 und 17 ist ein weiterer Aspekt der Erfindung dargestellt. Der in Fig. 14 dargestellte Rahmen 1 ist hier auf einem Fahrgestell 20 gelagert, mit dem der Rahmen während des Suchens transportiert werden kann. Das Fahrgestell ist in seiner Breite etwas größer als die Breite des Rahmens 1 so daß der Rahmen 1 gut auf dem Fahrgestell gelagert werden kann. Das Fahrgestell 20 besteht im wesentlichen aus einem Auflagerahmen 21, einer Verstärkungsachse 22, Rädern 23 und einer Deichsel 24. Wie auch in Fig. 17 dargestellt ist, besteht der Auflagerahmen 21 aus steckbaren PVC-Rohren, wobei die Rohre jweils mit einem Eckverbindungsstück fest verbunden sind, so daß der Auflagerahmen 21 weitestgehend zerlegt werden kann, ohne daß dabei echte Kleinteile, wie z.B. die Eckverbindungsstücke, übrig bleiben würden. Der gesamte Auflagerahmen 21 läßt sich also in die vier Seitenteile mit jeweils einem Eckverbindungsstück zerlegen. Dabei weisen die Einzelteile außerdem noch Anschlußstücke für die Verstärkungsachse 22, die Räder 23 und die Deichsel 24 auf. Das gesamte Fahrgestell läßt sich also in acht Einzelteile zerlegen und damit ebenso einfach transportieren wie der übrige Rahmen. Die Einzelteile des Fahrgestells 20 weisen in den Verbindungsbereichen korrespondierende Bohrungen auf, in die ein Dorn eingesteckt werden kann, um den Rahmen auf diese Weise zusammenzuhalten.

## Patentansprüche

1. Rahmen für ein Suchgerät zum Detektieren und Orten von insbesondere metallischen Gegenständen, der zur Aufnahme von mindestens einer Leiterschleife ausgebildet und klapp- oder faltbar ausgelegt ist, wobei der Rahmen Teilstücke aufweist, die durch Gelenke verbunden sind,
**dadurch gekennzeichnet,**
**daß** mindestens zwei Gelenke (2) symmetrisch zueinander in dem Rahmen (1) in sich im wesentlichen linear erstreckenden Bereichen des Rahmens (1) angeordnet sind,
**daß** diese zwei Gelenke (2) senkrecht zu einer Rahmenebene klappbar sind, und
**daß** die Teilstücke (6) des Rahmens (1), die durch diese Gelenke (2) verbunden sind, auch im geklappten Zustand mit den Gelenken in Verbindung sind.

2. Rahmen nach Anspruch 1,
**dadurch gekennzeichnet,**
**daß** die Gelenke (2) um nahezu 180 klappbar sind.

3. Rahmen nach einem der Ansprüche 1 oder 2,
**dadurch gekennzeichnet,**
**daß** die Gelenke (2) zwei parallel angeordnete, gegeneinander drehbare Scheiben (11) aufweisen.

4. Rahmen nach einem der vorhergehenden Ansprüche,
**dadurch gekennzeichnet,**
**daß** jedes Gelenk (2) zwei Schenkel aufweist, und
**daß** jeder Schenkel ein Verbindungsstück (8) und eine fest damit verbundene Scheibe (11) aufweist.

5. Rahmen nach einem der vorhergehenden Ansprüche,
**dadurch gekennzeichnet,**
**daß** die Scheibe (11) als Hohlscheibe ausgebildet ist.

6. Rahmen nach einem der vorhergehenden Ansprüche,
**dadurch gekennzeichnet,**
**daß** die Teilstücke (5, 6) des Rahmens (1) als Kohlefaserrohre ausgebildet sind, und
**daß** die Kohlefaserrohre hohl und zur Aufnahme der Leiterschleife ausgebildet sind.

7. Rahmen nach einem der vorhergehenden Ansprüche,
**dadurch gekennzeichnet,**
**daß** ein im wesentlichen rechteckiger Rahmen sechs Teilstücke (5, 6), zwei Gelenke (2) und außerdem vier Eckverbindungsstücke (3) aufweist.

8. Rahmen nach einem der vorhergehenden Ansprüche,
**dadurch gekennzeichnet,**
**daß** die Eckverbindungsstücke (3) ein topfartiges Drehteil (14) und einen Deckel (16) aufweisen.

9. Rahmen nach einem der Ansprüche 1 bis 6,
**dadurch gekennzeichnet,**
**daß** ein im wesentlichen rechteckiger Rahmen sechs Teilstücke (5, 6) und sechs Gelenke (2) aufweist.

10. Rahmen nach Anspruch 9,
**dadurch gekennzeichnet,**
**daß** von diesen sechs Gelenken (2) vier Gelenke in den Eckbereichen des Rahmens (1) angeordnet sind.

11. Rahmen nach einem der Ansprüche 1 bis 6,
**dadurch gekennzeichnet,**
**daß** ein im wesentlichen rechteckiger Rahmen (1) eine beliebige gerade Anzahl von Teilstücken (5, 6) und modifizierten Gelenken (17) aufweist, so daß ein nahezu beliebig großer Rahmen gebildet ist, und
**daß** die modifizierten Gelenke (17) Zapfen zur Aufnahme von den Rahmen unterteilenden Rohren (19) aufweisen.

12. Rahmen nach einem der Ansprüche 1 bis 11, der einem zum Transport des Rahmens geeigneten Fahrgestell zugeordnet ist,
**dadurch gekennzeichnet,**
**daß** das Fahrgestell (20) steckbare Kunststoffrohre, insbesondere PVC-Rohre, aufweist,
**daß** das Fahrgestell (20) aus Kunststoff bestehende Räder (23) aufweist,
**daß** die Breite des Fahrgestells etwas größer ist als die Breite des Rahmens (1).

13. Rahmen nach Anspruch 12,
**dadurch gekennzeichnet,**
**daß** das Fahrgestell (20) einen Auflagerahmen (21) aufweist, und
**daß** der Auflagerahmen (21) aus steckbaren Rohren besteht, die jeweils mit einem Eckverbindungsstück fest verbunden sind.

## Claims

1. Frame for a detector for detecting and locating more particularly metal objects, which is constructed for receiving at least one conductor loop and is designed in a foldable or tiltable manner, the frame having parts joined by joints, **characterized in that** at least two joints (2) are arranged symmetrically to one another in the frame (1) in substantially linearly extending areas of said frame (1), that said two joints (2) are foldable perpendicular to a frame plane and that the parts (6) of the frame (1) joined by these joints (2) are also joined to the joints in the folded state.

2. Frame according to claim 1, **characterized in that** the joints (2) are foldable by almost 180°.

3. Frame according to one of the claims 1 or 2, **characterized in that** the joints (2) have two parallel disks (11), which are rotatable in opposition.

4. Frame according to one of the preceding claims, **characterized in that** each joint (2) has two legs and that each leg has a connecting piece (8) and a disk (11) firmly connected thereto.

5. Frame according to one of the preceding claims, **characterized in that** the disk (11) is constructed as a hollow disk.

6. Frame according to one of the preceding claims, **characterized in that** the parts (5, 6) of the frame (1) are constructed as carbon fibre tubes and that the carbon fibre tubes are hollow and constructed for receiving the conductor loop.

7. Frame according to one of the preceding claims, **characterized in that** a substantially rectangular frame has six parts (5, 6), two joints (2) and four corner connecting pieces (3).

8. Frame according to one of the preceding claims, **characterized in that** the corner connecting pieces (3) have a pot-shaped turning part (14) and a cover (16).

9. Frame according to one of the claims 1 to 6, **characterized in that** a substantially rectangular frame has six parts (5, 6) and six joints (2).

10. Frame according to claim 9, **characterized in that** of said six joints (2), four joints are located in the corner regions of the frame (1).

11. Frame according to one of the claims 1 to 6, **characterized in that** a substantially rectangular frame (1) has a random even number of parts (5, 6) and modified joints (17), so that a virtually randomly large frame is formed and that the modified joints (17) have pins for receiving tubes (19) subdividing the frame.

12. Frame according to one of the claims 1 to 11 associated with a chassis suitable for transporting the frame, **characterized in that** the chassis (20) has pluggable plastic tubes, particularly PVC tubes, that the chassis (20) has wheels (23) made from plastic and that the width of the chassis is somewhat greater than the width of the frame (1).

13. Frame according to claim 12, **characterized in that** the chassis (20) has a support frame (21) and that the support frame (21) comprises pluggable tubes, which are in each case firmly connected to a corner connecting piece.

## Revendications

1. Carcasse pour un dispositif détecteur servant à détecter et localiser des objets en particulier métalliques, qui est conformé pour recevoir au moins une boucle conductrice et est construit repliable ou rabattable, la carcasse présentant des parties qui sont reliées par des articulations,
***caractérisée***
***en ce qu***'au moins deux articulations (2) sont placées symétriquement l'une par rapport à l'autre dans la carcasse (1) dans des parties de la carcasse (1) s'étendant sensiblement de manière rectiligne,
***en ce que*** ces deux articulations (2) sont rabattables perpendiculairement à un plan de carcasse, et
***en ce que*** les parties (6) de la carcasse (1) qui sont reliées par ces articulations (2) sont également en liaison avec les articulations à l'état rabattu.

2. Carcasse selon la Revendication 1, ***caractérisée en ce que*** les articulations (2) sont rabattables sur près de 180°.

3. Carcasse selon l'une quelconque des Revendications 1 ou 2, ***caractérisée en ce que*** les articulations (2) présentent deux disques (11) parallèles pouvant tourner l'un par rapport à l'autre.

4. Carcasse selon l'une quelconque des Revendications précédentes, ***caractérisée en ce que*** chaque articulation (2) présente deux branches et ***en ce que*** chaque branche présente un élément de liaison (8) et un disque (11) relié fermement à celui-ci.

5. Carcasse selon l'une quelconque des Revendications précédentes, ***caractérisée en ce que*** le disque (11) est conformé en disque creux.

6. Carcasse selon l'une quelconque des Revendications précédentes, ***caractérisée en ce que*** les parties (5, 6) de la carcasse (1) sont formées en tubes de fibres de carbone et ***en ce que*** les tubes en fibres de carbone sont creux et sont conformés pour recevoir la boucle conductrice.

7. Carcasse selon l'une quelconque des Revendications précédentes, ***caractérisée en ce qu'***une carcasse pour l'essentiel rectangulaire comprend six parties (5, 6), deux articulations (2) et en plus quatre connecteurs d'angle (3).

8. Carcasse selon l'une quelconque des Revendications précédentes, ***caractérisée en ce que*** les connecteurs d'angle (3) présentent une partie rotative (14) en forme de godet et un couvercle (16).

9. Carcasse selon l'une quelconque des Revendications 1 à 6, ***caractérisée en ce qu***'une carcasse pour l'essentiel rectangulaire comprend six parties (5, 6) et six articulations (2).

10. Carcasse selon la Revendication 9, ***caractérisée en ce que,*** sur les six articulations (2), quatre articulations sont placées dans les parties d'angle de la carcasse (1).

11. Carcasse selon l'une quelconque des Revendications 1 à 6, ***caractérisée en ce qu***'une carcasse (1) pour l'essentiel rectangulaire comprend un nombre pair quelconque de parties (5, 6) et d'articulations modifiées (17), de telle sorte qu'une carcasse de taille presque quelconque soit formée, ***et en ce que*** les articulations (17) modifiées présentent des tenons pour recevoir des tubes (19) subdivisant la carcasse.

12. Carcasse selon l'une quelconque des Revendications 1 à 11, qui est associée à un châssis convenant au transport de la carcasse, ***caractérisée en ce que*** le châssis (20) présente des tubes enfichables en matière plastique, en particulier des tubes en PVC, ***en ce que*** le châssis (20) présente des roues (23) en matière plastique, ***en ce que*** la largeur du châssis est un peu supérieure à la largeur de la carcasse (1).

13. Carcasse selon la Revendication 12, ***caractérisée en ce que*** le châssis (20) présente un cadre support (21), et **en *ce que*** le cadre support (21) est composé de tubes enfichables qui sont chacun reliés fermement avec un connecteur d'angle.
